# EUROPEAN PATENT SPECIFICATION

(11) **EP 1 706 363 B1**
(45) Date of publication and mention of the grant of the patent: **09.02.2011**
(21) Application number: 05701989.5
(22) Date of filing: 21.01.2005
(51) Int. Cl.: C04B 28/00

(54) **FILLING MATERIAL**
FÜLLMATERIAL
MATIERE DE REMPLISSAGE

(30) Priority: 21.01.2004 GB 0401232
(43) Date of publication of application: 04.10.2006
(73) Proprietor: Ecofil Limited, Bowden Cheshire WA14 3QP (GB)
(72) Inventor: HOLDER, David, Bowdon,Cheshire WA14 3QP (GB); COLLINSON, John, Bolton BL6 5SE (GB)
(74) Representative: Wilson Gunn
(86) International application number: PCT/GB2005/000227
(87) International publication number: WO 2005/070848

(56) References cited:
- EP-A- 0 211 712
- WO-A-00/50355
- WO-A-92/08679
- GB-A- 503 539
- GB-A- 1 160 746

## Description

The present invention relates to a filling material which is particularly suitable for filling joints in paving.

Traditionally, joints between paving flags, cobbles and stone setts have been filled with sand and cement mortar. The mortar is difficult and time-consuming to apply and often stains the flags during its application Furthermore, once the mortar sets it eventually cracks and spills which looks unsightly and allows weeds etc to grow between the paving flags. Although, the mortar can be replaced, it is particularly difficult to remove the mortar without damaging the paving flags as it adheres to the flags as it sets.

A similar approach is to apply kiln dried sand mixed with dry cement. The mixture is brushed into the joints in a dry state and then sprinkled with water in order to set the mixture as cement. This approach is beset with problems as the distribution of cement in the mixture is uneven and where sand-only or mixture comprising predominantly sand is brushed into joints it is quickly washed or blown out of the joints by rain and wind. Generally, there is not enough cement in a mixture of this kind to ensure durable joints and as a consequence the mortar in joints filled in this way tends to crack even under light traffic.

It is also known to use asphalt to fill joints. However, asphalt is generally only used for cobbles. The application of asphalt is very slow and can cause permanent staining to the cobbles. Furthermore, the subsequent removal of cobbles for repairs etc is very difficult, time consuming and costly.

In an attempt to address these problems, a wide jointing compound called Geofix (RTM) has been developed. Geofix (RTM) is a ready to use product which sets hard on immediate exposure to oxygen. The product is vacuum packed to avoid exposure to oxygen. Therefore, the packs need to be carefully handled in storage and transport, as any slight damage to the pack will result in the contents setting hard, rendering the product useless. Furthermore, the need to vacuum pack the product introduces further costs and complexities into the manufacture of the product.

WO 92/08679 discloses air drying binders based on polybutadiene oils which are liquid at room temperature and aromatic-free aliphatic hydrocarbons and/or turpentine oil, as well as the use of such binders in reinforcing, bonding, coating, and/or impregnating construction materials, residues, waste or any other kind of material.

Chemical abstracts 67:33886, Influence of film preventing agents in the drying of laquers, K.Hajek, Deutsche Farben-zeitschrift (1967), 21 (3), 128-32 discloses the retardation of drying in films of alkyd resin paints after addition of methyl ethyl ketoxime or butyraldoxime, which was added to prevent film formation.

Thus, it is an object of the present invention to provide a ready to use filling material for paving flags and the like whereby the setting/curing of the material is retarded such that its use is made easier as it is not necessary to prepare and pack the material in an oxygen free environment.

According to a first aspect of the present invention there is provided a filling material for use with paving flags and the like, comprising at least one base material, at least one binder, at least one cross-linking agent, a solvent and at least one cure retarder, wherein the cure retarder is methyl ethyl ketoxime.

Advantageously, the setting/curing of the material of the present invention is retarded such that the material does not begin to set/cure on immediate exposure to oxygen. Therefore, whilst it is possible, it is not necessary for the material to be produced and packed in an inert atmosphere. Clearly, this reduces the costs involved in manufacture and eases the manufacturing and transport processes.

When compared to traditional methods as hereinbefore described, the material of the present invention offers a number of benefits. For example, the product is a one-part material which can be tipped out of its container and easily brushed into the joints without the need for specialist knowledge, skills or equipment. Clearly, this saves time, labour and cost. Furthermore, there is very little, if any, waste with the material of the present invention as all material can be brushed into the joints between the paving flags. A further advantage of the present invention is that it does not permanently stain the surface flags.

A still further advantage of the present invention is that the material, once set/cured does not adhere to the sides of the flags so that the flags are removed in order that the cables etc thereunder can be repaired, the flags can be re-used.

A significant advantage of the present invention is that it is environmentally friendly in that the material once set/cured, it is permeable to water and oxygen, such that the underlying soil and plant roots can 'breathe'.

A yet further advantage of the present invention is that the use of a retarder not only delays settings/cure of the material at 'average' temperatures i.e temperatures up to 25°C, but it delays cure at higher temperatures typically in the range of one skilled in the art would expect the rate of cure to increase at higher temperatures. However, setting/cure of the material of the present invention remains delayed at higher temperature. Therefore, the material can be used for periods longer than expected at higher temperatures.

The base material of the present invention is preferably granular and may be of natural or synthetic origin. The granular base material preferably has a particle size in the range from 0.1 to 6mm.

Suitable bases for use with the present invention, which may be used alone or in combination, include any of the following: silica, sand, crushed glass, granite, basalt and any other aggregate containing silica.

The base material preferably constitutes from 95 to 99% w/w of the material of the present invention.

The binder of the present invention may be a blend of drying oils of vegetable or synthetic origin.

Suitable binders for use with the present invention, which may be used alone or in combination, include any of the following: polybutadiene, alkyd resin and linseed oil or other vegetable oils.

The binder preferably constitutes from 1 to 5% w/w of the material of the present invention.

Suitable solvents for use with the present invention include any aliphatic and/or aromatic hydrocarbon solvents. Preferably, the solvent is white spirit.

The solvent of the present invention preferably constitutes from 0.1 to 2% w/w of the material of the present invention.

Suitable cross-linking agents include any of the following, either alone or in combination, metallic driers such as cobalt octoate, cobalt zirconium complexes and manganese salts.

Suitable additional retarders, which may also be referred to as anti-skinning agents, for use with the present invention, include terpine and pine oils and mixture thereof.

The retarder preferably constitutes from 0.00005 to 0.05% w/w of the material of the present invention.

The material of the present invention may further comprise any of the following additional ingredients either alone or in combination; pigments, biocides and plasticisers.

The material of the present invention may be packed in airtight containers to aid transport. Furthermore, the package may comprise an oxygen absorbing material such as that available from Mitsubishi Gas Chemical Company under the registered trademark Ageless. Such a material serves to enhance the shelf-life of the material.

According to the second aspect of the present invention there is provided a method for preparing a filling material for use with paving flags and the like comprising the steps of; blending together a retarder and solvent with a binder and adding to this at least one base material, wherein the retarder is methyl ethyl ketoxime.

The filling material is then packed into appropriate packaging and the packaging is sealed.

It of course to be understood that the present invention is not intended to be limited to the embodiment as hereinbefore described which is described by way of example only.

## Claims

1. A filling material for use with paving flags and the like comprising at least one base material, at least one binder, at least one cross-linking agent, a solvent and at least one cure retarder, wherein the cure retarder is methyl ethyl ketoxime.

2. A material according to claim 1, wherein the base is a granular material having a particle size in the range from 0.1 to 6.0mm.

3. A material according to claim 1 or claim 2, wherein the base material is selected from any of the following either alone or in combination: silica, sand, crushed glass, granite and basalt.

4. A material according to any one of the preceding claims, wherein the base material constitutes from 95 to 99% w/w of the material.

5. A material according to any one of the preceding claims, wherein the binder is a blend of drying oils of vegetable or synthetic origin.

6. A material according to any one of the preceding claims, wherein the binder is selected from any of the following either alone or in combination: polybutadiene, alkyd resin and linseed oil.

7. A material according to any one of the preceding claims, wherein the binder constitutes from 1 to 5% w/w of the material.

8. A material according to any one of the preceding claims, wherein the solvent is an aliphatic and/or aromatic hydrocarbon solvent.

9. A material according to any one of the preceding claims, wherein the solvent is white spirit.

10. A material according to any one of the preceding claims, wherein the solvent constitutes from 0.1 to 2% w/w of the material.

11. A material according to any one of the preceding claims, wherein the cross-linking agent is selected from any of the following either alone or in combination: cobalt octoate, cobalt zirconium complexes or manganese salts.

12. A material according to any one of the preceding claims, wherein the retarder constitutes from 0.00005 to 0.05% w/w of the material.

13. A material according to any one of the preceding claims, wherein the material does not, cure on immediate exposure to oxygen.

14. A material according to any one of the preceding claims, wherein, once cured, the material is permeable to water and oxygen.

15. A method for preparing a filling material for use with paving flags and the like comprising the steps of: blending together a retarder and solvent with a binder and adding to this at least one base material, wherein the retarder is methyl ethyl ketoxime.

16. The use of methyl ethyl ketoxime as a cure retarder in a filling material for use with paving flags and the like, the filling material further comprising at least one base material, at least one binder, at least one cross-linking agent and a solvent.

## Patentansprüche

1. Füllmaterial zur Anwendung bei Pflasterplatten und ähnlichem umfassend mindestens ein Grundmaterial, mindestens ein Bindemittel, mindestens ein Vernetzungsmittel, ein Lösungsmittel und mindestens einen Aushärtungsverzögerer, wobei es sich bei dem Aushärtungsverzögerer um Methylethylketoxim handelt.

2. Material nach Anspruch 1, wobei es sich bei dem um ein Granulatmaterial mit einer Teilchengröße im von 0,1 bis 6,0 mm handelt.

3. Material nach Anspruch 1 oder Anspruch 2, wobei das Grundmaterial, entweder einzeln oder in Kombination, aus den folgenden ausgewählt ist: Siliziumdioxid, Sand, Glasbruch, Granit und Basalt.

4. Material nach einem der vorstehenden Ansprüche, wobei das Grundmaterial von 95 bis 99 Gew.% des Materials ausmacht.

5. Material nach der vorstehenden Ansprüche, wobei es sich bei dem Bindemittel um eine Mischung von Trockenölen pflanzlichen oder synthetischen Ursprungs handelt.

6. Material nach einem der vorstehenden Ansprüche, wobei das Bindemittel, entweder einzeln oder in Kombination, aus den folgenden ausgewählt ist: Polybutadien, Alkydharz und Leinsamenöl.

7. Material nach einem der vorstehenden Ansprüche, wobei das Bindemittel von 1 bis 5 Gew.% des Materials ausmacht.

8. Material nach einem der vorstehenden Ansprüche, wobei es sich bei dem Lösungsmittel um ein aliphatisches und/oder aromatisches Kohlenwasserstoff-Lösungsmittel handelt.

9. Material nach einem der vorstehenden Ansprüche, wobei es sich bei dem um Terpentinersatz (White Spirit) handelt.

10. Material nach einem der vorstehenden Ansprüche, wobei das Lösungsmittel von 0,1 bits 2 Gew.% des Materials ausmacht.

11. Material nach einem der vorstehenden Ansprüche, wobei das Vernetzungsmittel, entweder einzeln oder in Kombination, aus den folgenden ausgewählt ist: Kobaltoctoat, Kobalt-Zirkoniumkomplexe oder Mangansalze.

12. Material nach einem der vorstehenden Ansprüche, wobei der Verzögerer von 0,00005 bis 0,05 Gew.% des Materials ausmacht.

13. Material nach einem der vorstehenden Ansprüche, wobei das Material nicht bei unmittelbarem Kontakt mit Sauerstoff aushärtet.

14. Material nach einem der vorstehenden Ansprüche, wobei das Material, nachdem es ist, wasserdurchlässig und sauerstoffdurchlässig ist.

15. Verfahren zur Zubereitung eines Füllmaterials zur Anwendung bei Pfiasterplatten und ähnlichem umfassend die Schritte: Zusammenmischen eines Verzögerers und Lösungsmittels mit einem Bindemittel und Zugeben von mindestens einem Grundmaterial zu denselben, wobei es sich bei dem Verzögerer um Methylethylketoxim handelt.

16. Verwendung von Methylethylketoxim als ein Aushärtungsverzögerer bei einem Füllmaterial zur Anwendung bei Pflasterplatten und ähnlichem, wobei das Füllmaterial darüber hinaus ein Grundmaterial, mindestens ein Bindemittel, mindestens ein Vernetzungsmittel und ein Lösungsmittel umfasst.

## Revendications

1. Matériau de remplissage à utiliser avec des dalles de pavage et similaires comprenant au moins un matériau de base, au moins un liant, au moins un agent de réticulation, un solvant et au moins un retardateur de durcissement, où le retardateur de durcissement est le méthyl éthyl cétoxime.

2. Matériau selon la revendication 1, dans lequel le matériau de base est un matériau granulaire ayant une taille de particule dans la gamme de 0, 1 à 6,0 mm.

3. Matériau selon la revendication 1 ou la revendication 2, dans lequel le matériau de base est choisi parmi l'un quelconque des éléments suivants seul ou en combinaison : la silice, le sable, le verre granulé, le granite et le basalte.

4. Matériau selon l'une quelconque des revendications précédentes, dans lequel le matériau de base constitue de 95 à 99 % p/p du matériau.

5. Matériau selon l'une quelconque des revendications précédentes, dans lequel le liant est un mélange d'huiles siccatives d'origine végétale ou synthétique.

6. Matériau selon l'une quelconque des revendications précédentes, dans lequel le liant est choisi parmi l'un quelconque des éléments suivants, seul ou en combinaison : le poly(butadiène), une résine alkyde et de l'huile de lin.

7. Matériau selon l'une quelconque des revendications précédentes, dans lequel le liant constitue de 1 à 5 % p/p du matériau.

8. Matériau selon l'une quelconque des revendications précédentes, dans lequel le solvant est un solvant d'hydrocarbure aliphatique et/ou aromatique.

9. Matériau selon l'une quelconque des revendications précédentes, dans lequel le solvant est le white spirit.

10. Matériau selon l'une quelconque des revendications précédentes, dans lequel le solvant constitue de 0, 1 à 2 % p/p du matériau.

11. Matériau selon l'une quelconque des revendications précédentes, dans lequel l'agent de réticulation est choisi parmi l'un quelconque des éléments suivants, seul ou en combinaison : l'octoate de cobalt, les complexes de cobalt-zirconium ou les sels de manganèse.

12. Matériau selon l'une quelconque des revendications précédentes, dans lequel le retardateur constitue de 0,00005 à 0,05 % p/p du matériau.

13. Matériau selon l'une quelconque des revendications précédentes, dans lequel le matériau ne durcit pas lors d'une exposition immédiate à l'oxygène.

14. Matériau selon l'une quelconque des revendications précédentes, dans lequel, une fois durci, le matériau est imperméable à l'eau et à l'oxygène.

15. Procédé de préparation d'un matériau de remplissage à utiliser avec des dalles de pavage et similaires comprenant les étapes consistant à: mélanger un retardateur et un solvant avec un liant et leur ajouter au moins un matériau de base, où le retardateur est le méthyl éthyl cétoxime.

16. Utilisation de méthyl éthyl cétoxime comme retardateur de durcissement dans un matériau de remplissage à utiliser avec des dalles de pavage et similaires, le matériau de remplissage comprenant en outre au moins un matériau de base, au moins un liant, au moins un agent de réticulation et un solvant,
